Europäisches Patentamt

European Patent Office

Office européen des brevets

(11) Veröffentlichungsnummer: **0 392 265**
**A2**

(12) **EUROPÄISCHE PATENTANMELDUNG**

(21) Anmeldenummer: **90105941.0**

(22) Anmeldetag: **28.03.90**

(51) Int. Cl.⁵: **G02B 6/44**

(30) Priorität: **12.04.89 DE 3912023**

(43) Veröffentlichungstag der Anmeldung:
**17.10.90 Patentblatt 90/42**

(84) Benannte Vertragsstaaten:
**AT BE CH DE FR GB IT LI NL SE**

(71) Anmelder: **Siemens Aktiengesellschaft**
**Wittelsbacherplatz 2**
**D-8000 München 2(DE)**

(72) Erfinder: **Saller, Helmut**
**Diemendorferstrasse 8**
**D-8000 München 71(DE)**
Erfinder: **Weber, Günther**
**Brünnsteinweg 7**
**D-8269 Burgkirchen(DE)**
Erfinder: **Ettenberger, Gisela**
**Zum Künstlerhof 7**
**D-8000 München 19(DE)**
Erfinder: **Diermeier, Heinz**
**Bahnhofstrasse 1a**
**D-8011 Vaterstetten(DE)**

(54) Optisches Übertragungselement.

(57) Das optische Übertragungselement, welches in seinem Inneren eine ölhaltige Füllmasse aufweist, ist mit einer zweischichtigen Außenhülle (AH) versehen. Dabei besteht die Innenschicht (AHI) aus einem Polyolefin und die Außenschicht (AHA) aus einem Polyester, insbesondere einem Polycarbonat. Die Schrumpfung und/oder Quellung der Innenschicht (AHI) wird von der harten Außenschicht (AHA) weitgehend kompensiert und die, insbesondere bei höheren Temperaturen auftretenden Quellkräfte, werden dadurch gering gehalten.

EP 0 392 265 A2

## Optisches Übertragungselement

Die Erfindung betrifft ein optisches Übertragungselement mit mindestens einem Lichtwellenleiter, der im Inneren einer zweischichtigen Außenhülle untergeordnet ist, wobei zwischen der Außenhülle und dem Lichtwellenleiter eine weiche, ölhaltige Füllmasse vorgesehen ist.

Ein optisches Übertragungselement dieser Art ist aus der EP-A 30 151 743 bekannt. Dabei ist dort von der Vorstellung ausgegangen, daß schädliche Einflüsse der Ölbestandteile der weichen Füllmasse möglichst weitgehend dadurch ausgeschalten werden, daß das Material der Innenschicht der zweischichtigen Außenhülle aus einem Aramid, Polyäthersulfon oder einem Polycarbonat besteht. Diese Materialien sind zwar weitgehend quellmittelbeständig, also insbesondere gegenüber den Kohlenwasserstoffölen der Füllmassen besser beständig, haben aber den Nachteil, daß sie sehr spannungsrißempfindlich sind. Um diesen Nachteil zu begegnen, wird auf die aus einem Polyäthersulfon oder Polycarbonat bestehende Innenschicht außen eine Schutzschicht aus einem Polyester, insbesondere einem Polybutylenterephthalat aufgebracht.

Der vorliegenden Erfindung liegt die Aufgabe zugrunde, auch für die Innenschicht ein besonders einfach zu verarbeitendes und billiges Material vorzusehen und eine einfache Verarbeitung der Außenhülle bei guten mechanischen Eigenschaften sicherzustellen. Gemäß der Erfindung wird dies bei einem optischen Übertragungselement der eingangs genannten Art dadurch erreicht, daß die Innenhülle aus einem Polyolefin besteht und die Außenhülle aus einem Polyester, insbesondere aus Polycarbonat.

Die nach der Extrusion der beiden Außenhülle auftretenden Schrumpfung und/oder Quellung der nicht völlig quellmittelbeständigen Innenschicht wird von der harten Außenschicht aus einem Polyester weitgehend kompensiert. Die bei der Lagerung in höheren Temperaturen (bei ca. 80° C) auftretenden Quellkräfte können in einfacher Weise durch eine gleichzeitige Reduzierung des Elastizitätsmoduls des Materials der Innenschicht gering gehalten werden, wobei E-Modulwerte zwischen 500 und 1100 N/mm² zweckmäßig sind und Werte um 800 N/mm² sich als besonders vorteilhaft erwiesen haben. Der E-Modulwert selbst sinkt durch die Ölaufnahme (Quellvorgang) ohnehin und die angegebenen Werte beziehen sich auf den Endzustand. Polycarbonate haben bei der Außenhülle den besonderen Vorteil, daß sie ihre in ihren mechanischen Eigenschaften besonders stabil sind.

Es ist zweckmäßig, wenn eine Quellung des Materials der Innenschicht durch Kohlenwasserstofföle der Füllmasse unter 6 Gewichtsprozent Ölaufnahme bei bis zu 80° C Erwärmung gehalten wird.

Eventuelle Längenänderungen der Innenschicht durch Ölaufnahme werden infolge der Reibung zwischen Innen- und Außenhülle unterdrückt und nur in eine Änderung des Innendurchmessers umgeformt, was unschädlich ist. Eine Längskontraktion in Achsrichtung ist bei dem erfindungsgemäßen Übertragungselement weitgehend vermieden. Das Polyolefin der Innenschicht wird auch über längere Zeit hin nicht klebrig, sodaß die Beweglichkeit des im Inneren enthaltenen Lichtwellenleiters weitgehend sichergestellt bleibt.

Die Erfindung und ihre Weiterbildungen werden nachfolgend anhand einer Zeichnung näher erläutert. Dort ist im Querschnitt ein optisches Übertragungselement in Form einer Lichtwellenleiter-Ader AD dargestellt, deren äußere Schutzhülle AH zweilagig ausgebildet ist und eine Außenschicht AHA und eine Innenschicht AHI aufweist. Daran schließt sich eine Füllmasse FC an, welche üblicherweise aus einem anorganischem Thixotropierungsmittel, einem Kohlenwasserstofföl sowie einem Verdikkungsmittel besteht. Im Inneren der Hohlader ist mindestens ein Lichtwellenleiter LW angeordnet, der außen mit einer Schutzschicht (coating) CT versehen ist. Um einerseits ein einfach zu verarbeitendes und billiges Material, insbesondere für die Innenhülle AHI, ver wenden zu können und andererseits den störenden Einfluß der Kohlenwasserstofföle des Füllmaterials FC kleinzuhalten, wird die Innenhülle IHI aus einem Polyolefin hergestellt. Besonders zweckmäßig ist die Verwendung von Polyethylen, welches vorteilhaft ultrahochmulekolar ist, d.h. Molgewichte größer 1 Million aufweist. Die Dichte des Materials sollte im Bereich zwischen 0,94 und 0,96 g/ml liegen. Bevorzugt kann hierfür das unter dem Handelsnamen "Lupolen" 5743C der Firma BASF bekannte Material eingesetzt werden.

Weiterhin läßt sich für die Innenhülle IHI auch vorteilhaft ein modifiziertes Polypropylen verwenden, d.h. es liegt als Copolymer mit Polyethylen (z.B. "Hostalen" PPR/PPH) vor, das als Blend mit vernetztem Polypropylen mit anorganischem Füllstoff versehen ist.

Für die Innenhülle AHI gelten weiterhin folgende zweckmäßige Festlegungen:
Mittlerer E- Modul 500-1100 N/mm², vorzugsweise 800 N/mm² Schmelzpunkt über 100° C
Quellung in Kohlenwasserstoffölen unter 6 Gewichtsprozent Ölaufnahme bis zu 80° C
Hohe Schmelzenstabilität mit MFI ("melt flow index") bei Verarbeitungstemperatur 10g/10min.
Gutes Kälteverhalten, d.h. bei -40° C kein Bruch bei Biegung mit Randfaserdehnung von 5 %.

Für das Material der Außenhülle AHA werden Polyester vorzugsweise Polycarbonate verwendet, wobei insbesondere hochmulekolares Polybutylenterephthalat eingesetzt werden kann. Unter dem Begriff "hochmulekorar" sollen dabei Materialien mit einem MFI (bei 250 ° C/2,16 kp) von 10 g/10min. verstanden werden.

Geeignet in diesem Zusammenhang ist das unter dem Handelsnamen "Grilpet" XE3060 der Firma Ems Chemie bekannte Material. Weiterhin können bevorzugt Polybutylenterephthalat/Polycarbonat-Blends verwendet werden, insbesondere das unter dem Handelsnamen "Ultrablend" KR4083 der Firma BASF bekannte Material.

Für die Außenhülle AHA gelten zweckmäßig folgende Festlegungen: E-Modulwerte zwischen 1200 und 2000 N/mm², bevorzugt höher als 1500 N/mm²

Geringe Aufnahme von Kohlenwasserstoffölen und zwar unter 0,2 Gewichtsprozent Kohlenwasserstofföle bei bis zu 80 ° C. Geringer thermischer Ausdehnungskoeffizient, d.h. unter $10^{-4}$ /K bis 80 ° C.

Schnelle und definierte Kristallisation. Kein Nachkristallisieren bei Raumtemperatur.

Gute Lichtbeständigkeit bis 1000 h Xenotest 1200, keine signifikante Änderung der Reißdehnung.

Geringe Wasseraufnahme, d.h. unter 1 Gew %.

Keine oder sehr geringe Spannungsrißempfindlichkeit im Kontakt mit Polyolefinölen und Reinigungsmitteln, wie Terpenen, Alkohol und Ketonen.

Niedriger Reibungskoeffizient, d. h. unter 0,4.

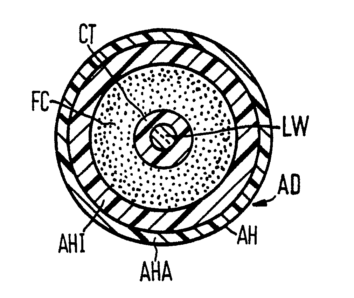

Für die Abmessungen der in der Figur dargestellten Hüllenstruktur ergeben sich zweckmäßig folgende Werte:

Außendurchmesser von AHA: zwischen 1,0 und 8,0 mm.

Innendurchmesser von AHA: zwischen 0,8 und 6,0 mm.

Außendurchmesser von AHI: zwischen 0,8 und 6,0 mm.

Innendurchmesser von AHI: zwischen 0,6 und 5,0 mm.

Außendurchmesser des Lichtwellenleiters LW: zwischen 0,25 und 0,5 mm.

**Ansprüche**

1. Optisches Übertragungselement (AD) mit mindestens einem Lichtwellenleiter (LW), der im Inneren einer zweischichtigen Außenhülle (AH) untergebracht ist, wobei zwischen der Außenhülle (AH) und dem Lichtwellenleiter (LW) eine weiche, ölhaltige Füllmasse (FC) vorgesehen ist, **dadurch gekennzeichnet,** daß die Innenhülle (AHI) aus einem Polyolefin besteht und die Außenhülle (AHA) aus einem Polyester, insbesondere einem Polycarbonat.

2. Optisches Übertragungselement nach Anspruch 1, **dadurch gekennzeichnet,** daß die Innenhülle (AHI) im Endzustand einen mittleren E-Modul zwischen 500 und 1100 N/mm² aufweist.

3. Optisches Übertragungselement nach einem der vorhergehenden Ansprüche, **dadurch gekennzeichnet,** daß die Innenhülle (AHI) einen Schmelzpunkt aufweist, der über 100 ° C liegt.

4. Optisches Übertragungselement nach einem der vorhergehenden Ansprüche, **dadurch gekennzeichnet,** daß die Quellung des Materials der Innenhülle (AHI) bei Temperaturen bis zu 80 ° C unter 6 Gewichtsprozent Ölaufnahme aus der Füllmasse (FC) liegt.

5. Optisches Übertragungselement nach einem der vorhergehenden Ansprüche, **dadurch gekennzeichnet,** daß das Material der Innenhülle (AHI) eine hohe Schmelzstabilität besitzt.

6. Optisches Übertragungselement nach einem der vorhergehenden Ansprüche, **dadurch gekennzeichnet,** daß das Material der Innenhülle (AHI) ein gutes Kältebruchverhalten bis zu -40 ° C besitzt

7. Optisches Übertragungselement nach einem der vorhergehenden Ansprüche, **dadurch gekennzeichnet,** daß als Material für die Innenhülle (AHI) Polyethylen, insbesondere ein ultrahochmolekulares Polyethylen mit einem Molgewicht größer als 1 Million verwendet ist.

8. Optisches Übertragungselement nach Anspruch 7, **dadurch gekennzeichnet,** daß das Polyethylen eine hohe Dichte aufweist, insbesondere zwischen 0,94 und 0,96 g/ml.

9. Optisches Übertragungselement nach einem der Ansprüche 1 bis 6, **dadurch gekennzeichnet,** daß als Material für die Innenhülle (AHI) ein modifiziertes Polypropylen verwendet ist.

10. Optisches Übertragungselement nach einem der vorhergehenden Ansprüche, **dadurch gekennzeichnet,** daß für die Außenhülle (AHA) als Material ein Polybutylenterephthalat verwendet ist.

11. Optisches Übertragungselement nach Anspruch 10, **dadurch gekennzeichnet,** daß als Material für die Außenhülle (AHA) ein hochmolekulares Polybutylenterephthalat/Polycarbonat-Blend verwendet ist.

12. Optisches Übertragungselement nach einem der vorhergehenden Ansprüche, **dadurch gekennzeichnet,** daß die Außenhülle (AHA) E-Modulwerte zwischen 1200 und 2000 N/mm², vorzugsweise größer als 1500 N/mm² aufweist.

13. Optisches Übertragungselement nach einem der vorhergehenden Ansprüche, **dadurch gekennzeichnet,** daß die Außenhülle (AHA) weniger als 0,2 Gewichtsprozent Kohlenwasserstofföle bei bis zu 80 ° C aufnimmt.

14. Optisches Übertragungselement nach einem der vorhergehenden Ansprüche, **dadurch gekennzeichnet,** daß die Außenhülle eine thermische Ausdehnung unter $10^{-4}$/K bis 80 °C aufweist.